(19) Europäisches Patentamt
European Patent Office
Office européen des brevets

(11) EP 3 996 832 B1

(12) **FASCICULE DE BREVET EUROPEEN**

(45) Date de publication et mention de la délivrance du brevet:
**06.11.2024 Bulletin 2024/45**

(21) Numéro de dépôt: **20750348.3**

(22) Date de dépôt: **09.07.2020**

(51) Classification Internationale des Brevets (IPC):
***B01D 61/14*** *(2006.01)* ***A61K 38/43*** *(2006.01)*
***B01D 71/56*** *(2006.01)* ***B01D 71/68*** *(2006.01)*
***C12N 9/00*** *(2006.01)*

(52) Classification Coopérative des Brevets (CPC):
**B01D 61/145; B01D 71/56; B01D 71/68;**
B01D 2311/04; B01D 2311/263; B01D 2315/10;
B01D 2315/16; B01D 2325/20

(86) Numéro de dépôt international:
**PCT/FR2020/051244**

(87) Numéro de publication internationale:
**WO 2021/005314 (14.01.2021 Gazette 2021/02)**

(54) **PROCEDE DE PURIFICATION DE COENZYMES A BASE ADENOSINE DE HAUT POIDS MOLECULAIRE PAR DIA-FILTRATION TANGENTIELLE**

VERFAHREN ZUR REINIGUNG VON COENZYMEN AUF ADENOSINBASIS MIT HOHEM MOLEKULARGEWICHT DURCH TANGENTIALE DIAFILTRATION

METHOD FOR PURIFYING HIGH MOLECULAR WEIGHT ADENOSINE-BASED COENZYMES BY TANGENTIAL DIAFILTRATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.07.2019 FR 1907798**

(43) Date de publication de la demande:
**18.05.2022 Bulletin 2022/20**

(73) Titulaire: **Institut des Sciences et Industries du Vivant et de l’Environnement - AgroParisTech**
**75231 Paris Cedex 05 (FR)**

(72) Inventeurs:
- **MOUTERDE, Louis**
  **51100 REIMS (FR)**
- **WILLIG, Gaëlle**
  **51100 REIMS (FR)**
- **ALLAIS, Florent**
  **51400 BOUY (FR)**

(74) Mandataire: **IP Trust**
**2, rue de Clichy**
**75009 Paris (FR)**

(56) Documents cités:
**WO-A1-2008/144792 CN-A- 101 434 971**
**DE-A1- 102004 002 259**

- **LOUIS M. M. MOUTERDE ET AL: "Isolation and Synthesis of One of the Most Central Cofactors in Metabolism: Coenzyme A", ORGANIC PROCESS RESEARCH AND DEVELOPMENT, vol. 23, no. 1, 10 December 2018 (2018-12-10), US, pages 19 - 30, XP055671869, ISSN: 1083-6160, DOI: 10.1021/acs.oprd.8b00348**
- **DRIOLI E ET AL: "CATALYTIC MEMBRANE REACTORS", CHEMISTRY & INDUSTRY, SOCIETY OF CHEMICAL INDUSTRY. LONDON, GB, no. 1, 1 January 1996 (1996-01-01), pages 19 - 22, XP000546758, ISSN: 0009-3068**
- **ROLF WICHMANN ET AL: "Continuous Enzymatic Transformation in an Enzyme Membrane Reactor with Simultaneous NAD(H) Regeneration", BIOTECHNOLOGY AND BIOENGINEERING,, vol. 23, no. 12, 12 December 1981 (1981-12-12), pages 2789 - 2802, XP001320697, ISSN: 0006-3592**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 3 996 832 B1

## Description

La présente invention a trait au domaine de la mise à disposition à grande échelle de coenzymes à base adénosine de haut poids moléculaire. Elle concerne en particulier un procédé de purification de coenzymes à base adénosine de haut poids moléculaire mettant en oeuvre une étape de dia-filtration tangentielle, voire de dia-ultrafiltration. Ce procédé est, par exemple, applicable à la purification du disulfure de coenzyme A ((CoAS)z), de la coenzyme A (CoA), du nicotinamide adénine dinucléotide ($NAD^+$), du nicotinamide adénine dinucléotide phosphate ($NADP^+$) ou de la flavin adénine dinucléotide (FAD).

## Etat de la technique et inconvénients

Les efforts de développement de procédés enzymatiques plus écologiques sont ralentis par plusieurs limitations. La principale d'entre elles concerne l'accessibilité aux coenzymes dont certaines enzymes sont dépendantes pour catalyser les réactions.

Les procédés actuels de production de coenzymes à base adénosine de haut poids moléculaire comprennent une étape de purification par chromatographie. C'est la seule méthode connue qui permet de séparer les coenzymes à base adénosine de haut poids moléculaire d'une coenzyme à base adénosine de poids moléculaire moindre, l'adénosine triphosphate (ATP), ainsi que des nucléotides adénosine diphosphate (ADP) et adénosine monophosphate (AMP). Le rendement d'une telle étape est très faible, et par conséquent le coût très élevé. De plus, ce procédé implique l'utilisation de solvants néfastes pour l'environnement.

Du fait du prix très élevé de certaines coenzymes, de nombreuses réactions enzymatiques sont mises en oeuvre par biosynthèse plutôt que par voie synthétique *in vitro* mais la limite de cette approche réside dans l'acceptabilité du substrat par les microorganismes utilisés. De plus, il n'est pas possible de produire de la sorte n'importe quelle molécule.

Un exemple de coenzyme d'intérêt pour de nombreuses réactions enzymatiques est la coenzyme A (CoA). Cette coenzyme affiche un prix de $2160/gramme pour une pureté d'environ 85%. De plus, du fait de sa fonction thiol libre, cette molécule est peu stable à des pH de 6 à 14, ce qui rend sa production à grande échelle difficile puisque les enzymes nécessaires à sa production sont actives dans cette gamme de pH.

Afin de s'affranchir de ces problèmes de stabilité, une voie chimio-enzymatique permettant de produire, à l'échelle du gramme, un dimère de CoA, le disulfure de Coenzyme A ((CoAS)z), a été développée (Mouterde L. et al. Org. Process Res. Dev. 2016, 20 (5) 954-959). Il est, grâce à ce procédé, possible d'accéder au CoA *via* la simple réduction du dimère de CoA en utilisant un réducteur de pont disulfure. Cette molécule dimérique est aussi disponible dans le commerce mais à un prix très élevé de l'ordre de $31600/gramme. Le coût élevé de la CoA et du $(CoAS)_2$ est très probablement dû aux méthodes de purification, comme énoncé précédemment. A titre d'exemple, l'une des méthodes les plus économiques qu'il soit possible de trouver dans la littérature utilise 1,8 Litres d'une solution aqueuse de LiCl à 300 mM, 1,2 Litres d'une solution aqueuse de LiCl à 600 mM, 1 Litre d'une solution aqueuse d'acétone 40% (v/v) contenant 0.028% d'hydroxylamine afin de purifier 1,9 gramme de $(CoAS)_2$.

Si ce procédé de préparation *in vitro* rend accessible la molécule de $(CoAS)_2$ à l'échelle du gramme, le problème du coût de la purification persiste. Ce qui explique que le cofacteur CoA soit sous-exploité par rapport aux nombreuses applications possibles.

Cette problématique est la même pour d'autres coenzymes à base adénosine de haut poids moléculaire tel que le nicotinamide adénine dinucléotide ($NAD^+$) ($173/gramme), le nicotinamide adénine dinucléotide phosphate ($NADP^+$) ($802/gramme) et la flavin adénine dinucléotide (FAD) ($383/gramme), dont l'adénosine triphosphate (ATP), l'adénosine diphosphate (ADP) et l'adénosine monophosphate (AMP) sont des coproduits de biosynthèse.

Différents documents décrivent un procédé dans lequel une coenzyme à base adénosine de haut poids moléculaire est retenue grâce à une filtration membranaire ; toutefois, ces derniers ont pour objectif la purification des produits d'une réaction enzymatique ayant lieu dans le rétentat (milieu de conversion, de fermentation...). Le rétentat contient donc la coenzyme mais également l'enzyme et d'autres molécules dans un milieu hétérogène (WO2008/144792 ; Drioli et al. (1996), Rolf Winchmann *et al.* (1981), DE 10 2004 002259)

Il existe à ce jour un réel besoin de rendre disponible à grande échelle et à un prix abordable différentes coenzymes à base adénosine de haut poids moléculaire.

## Exposé de l'invention

La présente invention concerne un procédé de purification d'une coenzyme à base adénosine de haut poids moléculaire caractérisé en ce qu'il met en oeuvre une dia-filtration tangentielle.

Dans un mode de réalisation préféré de l'invention, la molécule purifiée est un dimère de CoA, la Coenzyme A ou le $NADP^+$ (Figure1).

**Avantages de l'invention**

Le procédé de purification selon l'invention présente de nombreux avantages tel qu'exposé ci-après.

Les inventeurs ont fait la preuve de concept de l'intérêt de ce procédé en purifiant le dimère de CoA, la forme oxydée d'un cofacteur à fort intérêt, en le séparant d'un cofacteur à base adénosine de poids moléculaire moindre, l'adénosine triphosphate (ATP), ainsi que des nucléotides adénosine diphosphate (ADP) et adénosine monophosphate (AMP) présents en solution. Un screening de différentes membranes a montré le caractère non-évident quant à la séparation de ces molécules qui sont de nature physico-chimique similaire et de poids moléculaires que relativement différents.

Récemment, l'un des inventeurs a mis au point un nouveau procédé de synthèse de dimère de CoA par voie synthétique *in vitro* (Mouterde L. et al. Org. Process Res. Dev.2016205954-959) rendant possible la production de ce dimère à grande échelle. Toutefois, celui-ci n'a jusqu'à présent pas été exploité faute de procédé de purification industrialisable. Les recherches ont été poursuivies jusqu'à la mise au point du procédé selon l'invention qui résout ce problème et ouvre la voie à l'exploitation industrielle du CoA, élément limitant dans de nombreux projets restés, pour cette raison, au stade de la preuve de concept en laboratoire.

Ce procédé industrialisable présente un caractère « durable et vert » renforcé par les faits suivants :

- il est, de préférence, mis en oeuvre en l'absence de solvant organique ;
- la réduction considérable du volume de sels utilisés : ce procédé permet de substituer des solutions tampon de chlorure de lithium (300 et 600 mM), des solvants organiques (tel que l'acétone) et autres composés chimiques (tel que l'hydroxylamine) par de l'eau milliQ;
- il s'agit d'un procédé « 2 en 1 » dans lequel la purification et le "dessalage" sont réalisés en une seule étape ;
- l'eau de lavage peut être recyclée et réinsérée dans le procédé.

Ce procédé peut être utilisé pour purifiertoutes les coenzymes à base adénosine de haut poids moléculaire tel que le nicotinamide adénine dinucléotide ($NAD^+$), le nicotinamide adénine dinucléotide phosphate ($NADP^+$) ou la flavin adénine dinucléotide (FAD), en les séparant des co-produits de leurs biosynthèse (des petites molécules chargées, non chargées mais aussi de l'ATP, ADP et AMP).

La dia-filtration tangentielle est également avantageuse du fait qu'elle limite le colmatage et augmente la durée d'utilisation des membranes par rapport à une dia-filtration frontale. Ainsi la fréquence de remplacement de la membrane est réduite.

Le procédé offre la possibilité de réaliser la purification de la coenzyme à grande échelle.

Grâce à ses nombreux avantages, ce procédé ouvre la voie à une utilisation à grande échelle des réactions enzymatiques *in vitro* nécessitant l'utilisation de coenzyme à base adénosine de haut poids moléculaire.

## BREVE DESCRIPTION DES FIGURES

**Figure 1 :** Structures de $(CoAS)_2$, CoA et $NADP^+$

**Figure 2 :** Gamme HPLC du $(CoAS)_2$

**Figure 3 :** Pilote de filtration selon une configuration tangentielle en circuit fermé

**Figure 4 :** Gamme HPLC du $NADP^+$

**Figure 5 :** Pilote de dia-filtration tangentielle

## DESCRIPTION DETAILLEE DE L'INVENTION

Un premier objet de l'invention concerne un procédé de purification d'une coenzyme à base adénosine de haut poids moléculaire caractérisé en ce qu'il met en oeuvre une dia-filtration tangentielle.

Ainsi, grâce à la dia-filtration, la coenzyme d'intérêt est retenue alors que les molécules de plus petite taille, coproduits du procédé de synthèse de la coenzyme, sont éliminées dans le perméat.

Dans un mode de réalisation préféré de l'invention, la filtration est une dia-ultrafiltration.

Par « coenzyme », on entend un cofacteur nécessaire à l'activité d'une enzyme (protéine). Une coenzyme est une molécule organique non protéique. Parmi les coenzymes à base adénosine de haut poids moléculaire, on peut citer

le dimère de coenzyme A (disulfure de coenzyme A ou $(CoAS)_2$), la coenzyme A (CoA) ou ses dérivés, la nicotinamide adénine dinucléotide ($NAD^+$), la nicotinamide adénine dinucléotide phosphate ($NADP^+$) ou la Flavine Adénine Dinucléotide (FAD). Au sens de l'invention, une coenzyme de haut poids moléculaire est un composé dont le poids moléculaire est supérieur ou égal à 600 Da.

Dans un mode de réalisation préféré de l'invention, la coenzyme à base adénosine de haut poids moléculaire est un dimère coenzyme A.

Dans un autre mode de réalisation préféré de l'invention, la coenzyme à base adénosine de haut poids moléculaire est la coenzyme A ou un de ses dérivés.

Par « dérivés de la coenzyme A » au sens de l'invention, on entend un composé de formule (I)

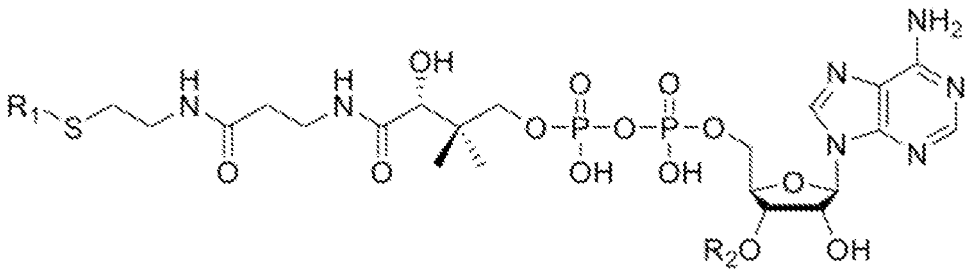

(I)

dans laquelle

$R_1$ représente un groupement acyle en $C_1$ à $C_{22}$ linéaire, cyclique ou branché, saturé ou insaturé, possédant ou non un groupement acide carboxylique, alcool et/ou amine en position terminale ou ramifiée ; un groupement alkyle en $C_1$ à $C_{22}$ linéaire, cyclique ou branché, saturé ou insaturé, possédant ou non un groupement acide carboxylique, alcool et/ou amine en position terminale ou ramifiée ; un groupement benzoyle ou benzyle

$R_2$ représente un H ou un groupement phosphate.

Dans un autre mode de réalisation préféré, la coenzyme à base d'adénosine à haut poids moléculaire est $NADP^+$.

Dans le cas de la coenzyme A, en raison d'un problème de stabilité lors de sa production, il est préférable de produire un dimère de CoA, à savoir le disulfure de CoA ($(CoAS)_2$). En effet, la CoA doit être stockée à -20 °C alors que le dimère de CoA peut être conservé à température ambiante. Une simple réaction de réduction du pont disulfure permet l'obtention de CoA. Des réducteurs adaptés à cette réaction sont par exemple le 2-mercaptoéthanol, le DTT ou le TCEP. Il est aussi possible de réaliser cette réduction par biocatalyse en utilisant une CoA-disulfide réductase.

Le procédé de purification selon l'invention présente le double avantage d'être peu coûteux et écologique. En effet, il repose sur la mise en oeuvre d'une dia-filtration réalisée sur une solution tampon aqueuse qui peut être purifiée avec de l'eau déionisée, ou toute autre solution tampon aqueuse. La solution qui permet la purification sera choisie en fonction de la coenzyme à purifier et du matériau de la membrane. L'homme du métier saura faire ce choix à l'aide de ses connaissances générales.

La matière de la membrane est choisie en fonction de la coenzyme à purifier. Il s'agira de préférence d'une membrane de filtration.

La dia-filtration est réalisée selon l'invention en l'absence de solvant organique, et au contraire en présence d'un solvant aqueux, selon l'invention une solution de lavage aqueuse ou toute autre solution tampon aqueuse, notamment avec de l'eau telle que de l'eau déionisée.

Dans un mode de réalisation préféré, la membrane utilisée est en polymère de type polyéthersulphone (PES) ou en polyamide modifié (tel que fourni par les fournisseurs) et la solution qui permet la purification est de l'eau déionisée. Ces paramètres sont applicables notamment pour purifier, un dimère de CoA, la coenzyme A et le $NADP^+$.

Comme mentionné précédemment, une coenzyme de haut poids moléculaire selon l'invention est un composé dont le poids moléculaire est supérieur ou égal à 600 Da.

Ainsi, dans l'objectif de purifier des coenzymes à base adénosine de haut poids moléculaire, le cut-off de la membrane permet de retenir les coenzymes dont le poids moléculaire est supérieur ou égal à 600 Da. Il est à noter que le cut-off des membranes annoncé par les fabricants ne reflète pas nécessairement la réalité et que d'autres facteurs tels que la conformation du composé, les fonctions chimiques présentes (notamment lorsqu'elle sont chargées) et les interactions membrane-composé peuvent influencer le passage ou non du composé à travers la membrane. A titre d'information, le poids moléculaire du dimère de CoA est de l'ordre de 1500 Da et celui de la CoA et du $NADP^+$ de l'ordre

de 750 Da.

Une définition fonctionnelle d'une membrane selon l'invention consiste à dire que la membrane doit laisser passer les molécules de poids moléculaire inférieur à 600 Da tout en retenant la coenzyme d'intérêt.

La filtration membranaire consiste, dans son principe, à appliquer sur la membrane une force motrice de transfert, ici une différence de pression, afin d'effectuer la séparation. Dans le cadre de la présente invention, la pression appliquée sur la solution de coenzyme à purifier est typiquement comprise entre 4 et 35 bars. Dans un mode de réalisation préférée, la pression appliquée est comprise entre 4 et 20 bars.

La dia-filtration permet de faire recirculer la solution dans laquelle se trouve le rétentat afin d'éliminer les molécules de petite taille indésirables présentes dans le rétentat, par un lavage, et donc d'améliorer la pureté des coenzymes.

Le procédé est avantageusement réalisé en continu, ce qui permet de purifier, puis de concentrer la coenzyme. Cela permet également d'utiliser peu de solvant et de le réutiliser (recyclage).

Ainsi, dans un mode de réalisation particulier, dans lequel le procédé permet de purifier le dimère de CoA, la CoA et le $NADP^+$ les conditions sont les suivantes : la membrane utilisée est en polymère PES ou en un matériau assimilé à du polyamide (polyamide modifié) sur laquelle une pression comprise entre 4 et 20 bars est appliquée et la diafiltration est réalisée avec de l'eau déionisée en continu.

Dans un mode de réalisation particulier de l'invention, la membrane est en polymère PES et une pression de 20 bars est appliquée.

Dans un mode de réalisation préféré de l'invention, la membrane est en polyamide modifié et une pression de 4 bars est appliquée.

Le dimère de coenzyme A traité par le procédé selon l'invention peut être purifié à au moins 83%. Dans un mode de réalisation particulier, elle est purifiée à 88%, 90%, 95%, voire 98% ou 99%.

La coenzyme A traitée par le procédé selon l'invention peut être purifiée à au moins 45%. Dans un mode de réalisation particulier, elle est purifiée à 88%, 90%, 95%, voire 98% ou 99%.

Le $NADP^+$ traité par le procédé selon l'invention peut être purifié à au moins 59%. Dans un mode de réalisation particulier, elle est purifiée à 88%, 90%, 95%, voire 98% ou 99%.

Le procédé selon l'invention permet d'avoir accès aux coenzymes à base adénosine de haut poids moléculaire en grande quantité et à un prix raisonnable via un procédé écologique et industriellement viable. Ce procédé ouvre donc la voie à de nouveaux marchés à fort potentiel.

## EXEMPLES

### EXEMPLE 1 : Etude de l'effet de différentes membranes sur la séparation de molécules de (CoAS)z *via* une filtration tangentielle.

Une gamme étalon a tout d'abord été réalisée en HPLC avec du $CoAS_2$ commercial à 85% à différentes concentrations afin de pouvoir mesurer précisément la quantité de la molécule cible dans les différentes fractions du procédé de purification (alimentation, rétentat, perméat). Les résultats obtenus sont présentés à la Figure 2.

Un milieu contenant $(CoAS)_2$, de l'adénosine triphosphate (ATP), de l'adénosine diphosphate (ADP) et de l'adénosine monophosphate (AMP), dans un volume final de 700 mL d'eau milliQ, a été utilisé pour effectuer le criblage des membranes.

Une technique de filtration membranaire tangentielle a été explorée afin de séparer les molécules présentes dans le mélange. Différents types de membranes commerciales : NP010, GE, GH, GK, GR15PP, HydraCore50-PS 7450 et HydraCore70pHT Series 7470PHT (Tableau 1), ont été étudiées selon une configuration tangentielle en circuit fermé (Figure 3).

Les caractéristiques des membranes étudiées telles que décrites par les fournisseurs sont résumées au Tableau 1.

**Tableau 1** : Propriétés principales des membranes étudiées

| **Fabriquant** | **Type** | **Membrane** | **Cut-off (Da)** | **Gamme de pH** | **Pression maximale** |
|---|---|---|---|---|---|
| Suez | UF | GE | 900 pour PEG | 1-11 | 40 bars |
| | UF | GH | 1400 pour PEG | 1-11 | 27 bars |
| | UF | GK | 1500 pour PEG | 1-11 | 27 bars |
| Microdyn-Nadir | NF | NP010 | 1000 | 0-14 | 40 bars |
| Alfa Laval | UF | GR95PP | 2000 | 1-13 | 10 bars |
| Hydronautics-Nitto | UF | HydraCore50-PS 7450 | 1000 | 2-11 | 41 bars |
| | NF | HydraCore70pHT Series 7470PHT | 720 | 1-13,5 | 41 bars |

Quatre pressions différentes ont été étudiées en fonction de la pression maximale applicable à chaque membrane (selon les recommandations du fabriquant). Le pourcentage de rétention des différents composés, pour chaque pression et membrane, a été calculé selon l'équation suivante :

$$\text{Rétention}_{\text{composé}} = (1 - C_{p\ \text{composé}} / C_{r\ \text{composé}}) \times 100$$

où $C_{p\ \text{composé}}$ et $C_{r\ \text{composé}}$ sont respectivement les concentrations du composé étudié dans le perméat et le rétentat.

Les résultats obtenus à un temps donné sont représentés au Tableau 2 ci-dessous.

| Type de membrane | Pression (bar) | Rétention de $(CoAS)_2$ (%) | Rétention d'ATP (%) | Rétention d'ADP (%) | Rétention d'AMP (%) |
|---|---|---|---|---|---|
| NP010 | 10 | 95.26 | 91.87 | 88.53 | 86.78 |
| | 20 | 100 | 91.78 | 87.57 | 85.17 |
| | 30 | 100 | 93.72 | 89.73 | 86.69 |
| | 35 | 100 | 94.27 | 90.27 | 86.94 |
| GE | 10 | 97.52 | 100 | 96.68 | 91.68 |
| | 20 | 98.34 | 100 | 97.23 | 96.78 |
| | 30 | 94 | 91.98 | 90.59 | 90.57 |
| | 35 | 95.20 | 93.23 | 91.43 | 91.12 |
| GH | 4 | 98.94 | 91.28 | 79.51 | 29.61 |
| | 6 | 98.54 | 92.33 | 83.73 | 38.61 |
| | 8 | 98.06 | 93.62 | 86.94 | 46.46 |
| | 10 | 97.95 | 94.14 | 87.98 | 49.83 |
| GK | 4 | 97.44 | 62.30 | 46.64 | 7.55 |
| | 6 | 97.22 | 66.20 | 52.07 | 12.78 |
| | 8 | 97.35 | 67.46 | 54.05 | 12.80 |
| | 10 | 96.72 | 67.84 | 55.48 | 15.33 |
| HydraCore50-PS 7450 | 10 | 100 | 99.83 | 99.93 | 99.28 |
| | 20 | 100 | 100 | 100 | 99.60 |
| | 30 | 100 | 100 | 100 | 99.58 |
| | 35 | 100 | 100 | 100 | 99.70 |
| HydraCore70pHT Series 7470PHT | 10 | 99.26 | 98.93 | 99.73 | 99.45 |
| | 20 | 100 | 100 | 100 | 99.72 |
| | 30 | 100 | 100 | 100 | 99.81 |
| | 35 | 100 | 100 | 100 | 99.84 |
| GR95PP | 4 | 65.38 | 31.18 | 22.85 | 12.87 |
| | 6 | 73.11 | 41.94 | 32.33 | 18.44 |
| | 8 | 75.01 | 48.90 | 39.49 | 24.63 |
| | 10 | 75.44 | 51.52 | 42.33 | 27.26 |

**Tableau 2** : Résumé des pourcentages de rétention de chacun des composés en fonction de la pression et du type de membrane

Les meilleurs résultats ont été obtenus avec la membrane GK, c'est-à-dire avec une membrane en polyamide modifié, ayant un cut-off de 1500 Da pour le PEG, et utilisable à un pH compris entre 1 et 11. La pression maximale recommandée pour cette membrane est 27 bars. La rétention différentielle de (CoAS)zest maximale à 4 bars mais également très satisfaisante aux autres pressions testées, à savoir jusqu'à 10 bars.

L'autre membrane ayant permis une purification du $(CoAS)_2$ est la membrane N0P10, c'est-à-dire une membrane en matériau polymère de type polyéthersulphone (PES) présentant un cut-off de 1000 Da et utilisable à une

pression maximale de 40 bars. Le meilleur résultat est obtenu à une pression de 20 bars.

**EXEMPLE 2** : **Etude de l'effet de différentes membranes sur la séparation de molécules de CoA *via* une filtration tangentielle.**

Une solution contenant du CoA, de l'adénosine triphosphate (ATP), de l'adénosine diphosphate (ADP), de l'adénosine monophosphate (AMP) et du 2-mercaptoethanol, dans un volume final de 700 mL d'eau milliQ, a été utilisée pour effectuer le criblage des membranes.

Une technique de filtration membranaire tangentielle a été explorée afin de séparer les molécules présentes dans le mélange. Différents types de membrane : GE, GH, GK ont été étudiées selon une configuration tangentielle en circuit fermé (Figure 3).

Les caractéristiques des membranes étudiées sont résumées au Tableau 1.

Quatre pressions différentes ont été étudiées en fonction de la pression maximale applicable à chaque membrane (selon les recommandations du fabriquant). Le pourcentage de rétention des différents composés, pour chaque pression et membrane, a été calculé selon l'équation suivante :

$$\text{Rétention}_{\text{composé}} = (1 - C_{p\ \text{composé}} / C_{r\ \text{composé}}) \times 100$$

où $C_{p\ \text{composé}}$ et $C_{r\ \text{composé}}$ sont respectivement les concentration du composé étudié dans le perméat et le rétentat.

Les résultats obtenus à un temps donné sont représentés au Tableau 3 ci-dessous.

| Type de membrane | Pression (bar) | Rétention de CoA (%) | Rétention d'ATP (%) | Rétention d'ADP (%) | Rétention d'AMP (%) | Rétention 2-mercaptoethanol (%) |
|---|---|---|---|---|---|---|
| GE | 4 | 99.2 | 94.43 | 91.04 | 62.51 | 12.74 |
| | 6 | 99.06 | 95.38 | 92.78 | 69.1 | 8.58 |
| | 8 | 85.96 | 83.66 | 81.42 | 63.32 | 1.52 |
| | 10 | 86.00 | 83.85 | 81.96 | 66.31 | -1.42 |
| GH | 4 | 98.86 | 95.38 | 91.51 | 62,41 | 11.56 |
| | 6 | 98.43 | 95.73 | 92.97 | 69,46 | 8.92 |
| | 8 | 83.54 | 82.04 | 79.74 | 62,80 | 0.13 |
| | 10 | 84.36 | 82.80 | 80.64 | 64,56 | -1.42 |
| GK | 4 | 84.96 | 73.56 | 69,87 | 40,53 | 8.78 |
| | 6 | 85.39 | 74.58 | 71,56 | 44,43 | 8.14 |
| | 8 | 85.38 | 74.96 | 72,41 | 46,28 | -0.25 |
| | 10 | 82.81 | 72.30 | 69,93 | 45,69 | -1.55 |

NB : les valeurs négatives correspondent aux conditions dans lesquelles le composé se déplace plus rapidement que le solvant.

**Tableau 3 :** Pourcentage de rétention de différents composés en fonction de la membrane et de la pression utilisées

Les meilleurs résultats ont été obtenus avec la membrane GK, c'est-à-dire avec une membrane en polyamide modifié, ayant un cut-off de 1500 Da pour le PEG, et utilisable à un pH compris entre 1 et 11. La pression maximale recommandée pour cette membrane est 27 bars. La rétention différentielle de CoA est maximale à 4 bars mais également

très satisfaisante aux autres pressions testées, à savoir jusqu'à 10 bars.

**EXEMPLE 3 : Etude de l'effet de différentes membranes sur la séparation de molécules de $NADP^+$ via une filtration tangentielle.**

Une gamme étalon a tout d'abord été réalisée en HPLC avec du $NADP^+$ commercial à 98% à différentes concentrations afin de pouvoir mesurer précisément la quantité de la molécule cible dans les différentes fractions du procédé de purification (alimentation, rétentat, perméat). Les résultats obtenus sont présentés à la Figure 4.

Une solution contenant du $NADP^+$, de l'adénosine triphosphate (ATP), de l'adénosine diphosphate (ADP) et de l'adénosine monophosphate (AMP), dans un volume final de 700 mL d'eau milliQ, a été utilisée pour effectuer le criblage des membranes.

Une technique de filtration membranaire tangentielle a été explorée afin de séparer les molécules présentes dans le mélange. Différents types de membrane : GE, GH, GK ont été étudiées selon une configuration tangentielle en circuit fermé (Figure 3).

Les caractéristiques des membranes étudiées sont résumées au Tableau 1.

Quatre pressions différentes ont été étudiées en fonction de la pression maximale applicable à chaque membrane (selon les recommandations du fabriquant). Le pourcentage de rétention des différents composés, pour chaque pression et membrane, a été calculé selon l'équation suivante :

$$\text{Rétention}_{\text{composé}} = (1 - C_{p\ \text{composé}} / C_{r\ \text{composé}}) \times 100$$

où $C_{p\ \text{composé}}$ et $C_{r\ \text{composé}}$ sont respectivement les concentrations du composé étudié dans le perméat et le rétentat.

Les résultats obtenus à un temps donné sont représentés au Tableau 4 ci-dessous.

| Type de membrane | Pression (bar) | Rétention de $NADP^+$ (%) | Rétention d'ATP (%) | Rétention d'ADP (%) | Rétention d'AMP (%) |
|---|---|---|---|---|---|
| GE | 4 | 94,69 | 96.30 | 90.58 | -67.59 |
| | 6 | 84,73 | 86.09 | 82.35 | -41.07 |
| | 8 | 83,83 | 85.05 | 81.77 | -29.96 |
| | 10 | 82,86 | 84.46 | 81.26 | -17.03 |
| GH | 4 | 85,11 | 88.97 | 82.73 | -53.90 |
| | 6 | 85,50 | 87.47 | 83.86 | -26.46 |
| | 8 | 85,02 | 86.67 | 83.70 | -11.32 |
| | 10 | 83,37 | 85.34 | 82.36 | -4.13 |
| GK | 4 | 83,59 | 87.54 | 78.96 | -57.94 |
| | 6 | 82,91 | 86.10 | 78.74 | -42.62 |
| | 8 | 82,44 | 85.65 | 78.47 | -38.18 |
| | 10 | 81,80 | 85.28 | 78.38 | -27.87 |

NB : les valeurs négatives correspondent aux conditions dans lesquelles le composé se déplace plus rapidement que le solvant.

**Tableau 4** : Pourcentage de rétention de différents composés en fonction de la membrane et de la pression utilisées

Les meilleurs résultats ont été obtenus avec la membrane GK, c'est-à-dire avec une membrane en polyamide

modifié, ayant un cut-off de 1500 Da pour le PEG, et utilisable à un pH compris entre 1 et 11. La pression maximale recommandée pour cette membrane est 27 bars. La rétention différentielle de $NADP^+$ est maximale à 4 bars mais également très satisfaisante aux autres pressions testées, à savoir jusqu'à 10 bars.

**EXEMPLE 4 : Séparation de molécules de $(CoAS)_2$ *via* dia-ultrafiltration tangentielle**

Une dia-ultrafiltration tangentielle (Figure 4) a été réalisée avec une solution d'alimentation contenant de la $(CoAS)_2$, de l'ATP, de l'ADP et de l'AMP dans un volume final de 200 mL d'eau milliQ. La pureté de la solution de départ en termes de $(CoAS)_2$ est de 45%.

La membrane utilisée est la membrane GK, c'est-à-dire avec une membrane en polyamide modifié, ayant un cut-off de 1500 Da pour le PEG, et utilisable à un pH compris entre 1 et 11.

La solution de lavage est de l'eau déionisée.

Les pertes et puretés attendues sont prédites grâce à l'équation suivante, où $C_{R,i,t}$ est la concentration dans le rétentat de chaque espèce i en solution au temps t, où $C_{A,i,0}$ est la concentration dans l'alimentation de chaque espèce i en solution au temps t=0, où $R_i$ est le taux de rétention de chaque espèce i en solution (entre 0 et 1), où $V_0$ est le volume d'alimentation et où $V_t$ est le volume de solution de lavage au cours du temps :

$$C_{R,i,t} / C_{A,i,0} = e^{(-(1-R_i) \times V_t / V_0)}$$

Les pertes sont calculées avec l'équation suivante, où $C_{A,i,0}$ est la concentration dans l'alimentation de chaque espèce i en solution au temps t=0, $C_{R,i,t}$ est la concentration dans le rétentat de chaque espèce i en solution au temps t :

$$\text{Pertes}_i\,(\%) = ((C_{A,i,0} - C_{R,i,t}) / C_{A,i,0}) \times 100$$

La pureté est calculée avec l'équation suivante où $C_{R,i,t}$ est la concentration dans le rétentat de chaque espèce i en solution au temps t, et i, j, k... sont les espèces en solution :

$$\text{Pureté}_i\,(\%) = (C_{R,i,t} / (C_{R,i,t} + C_{R,j,t} + C_{R,k,t})) \times 100$$

Un volume de dia-filtration (VD) correspond au volume d'alimentation
La solution d'alimentation a été lavée avec un VD de 5, avec une surface membranaire de 39 $cm^2$. 88% de l'ATP, 89% de l'ADP et 100% de l'AMP ont été éliminés pour obtenir une pureté en $(CoAS)_2$ égale à 83%. La pureté finale est une valeur relative qui dépend de la pureté initiale et du nombre de lavages.

La perméabilité étant la capacité d'une membrane à laisser passer une solution, celle-ci a été évaluée pour de l'eau déionisée avant et après la dia-ultrafiltration.

La perméabilité $L_p$ (L/h/$m^2$/bar) à l'eau a été calculée selon la formule suivante, où $J_v$ est le flux à l'eau (L/h/$m^2$), P la pression appliquée au système en entrée (bar), $V_p$ est le volume de perméat, t est un intervalle de temps (h) et S la surface de la membrane ($m^2$) :

$$L_p = J_v / P \qquad \text{avec } J_v = V_p / (t \times S)$$

La différence de perméabilité à l'eau avant et après la dia-ultrafiltration était inférieure à 1 %, la solution d'alimentation de la dia-ultrafiltration n'a donc pas colmaté la membrane, qui pourra être réutilisée.

**EXEMPLE 5** : **Séparation de molécules de la CoA *via* dia-ultrafiltration tangentielle.**

Une dia-ultrafiltration tangentielle (Figure 3) a été réalisée avec une solution d'alimentation contenant de la CoA, de l'ATP, de l'ADP, de l'AMP et du 2-mercaptoethanol dans un volume final de 200 mL d'eau milliQ. La pureté de la solution de départ en termes de CoA est de 13%.

La membrane utilisée est la membrane GK, c'est-à-dire avec une membrane en polyamide modifié, ayant un cut-off de 1500 Da pour le PEG, et utilisable à un pH compris entre 1 et 11.

La solution de lavage est de l'eau déionisée.

Les pertes et puretés attendues sont prédites grâce à l'équation suivante, où $C_{R,i,t}$ est la concentration dans le rétentat de chaque espèce i en solution au temps t, où $C_{A,i,0}$ est la concentration dans l'alimentation de chaque espèce

i en solution au temps t=0, où $R_i$ est le taux de rétention de chaque espèce i en solution (entre 0 et 1), où $V_0$ est le volume d'alimentation et où $V_t$ est le volume de solution de lavage au cours du temps :

$$C_{R,i,t} / C_{A,i,0} = e^{(-(1-R_i) \times V_t / V_0)}$$

Les pertes sont calculées avec l'équation suivante, où $C_{A,i,0}$ est la concentration dans l'alimentation de chaque espèce i en solution au temps t=0, $C_{R,i,t}$ est la concentration dans le rétentat de chaque espèce i en solution au temps t :

$$\text{Pertes}_i (\%) = ((C_{A,i,0} - C_{R,i,t}) / C_{A,i,0}) \times 100$$

La pureté est calculée avec l'équation suivante où $C_{R,i,t}$ est la concentration dans le rétentat de chaque espèce i en solution au temps t, et i, j, k... sont les espèces en solution :

$$\text{Pureté}_i (\%) = (C_{R,i,t} / (C_{R,i,t} + C_{R,j,t} + C_{R,k,t})) \times 100$$

Un volume de dia-filtration (VD) correspond au volume d'alimentation
La solution d'alimentation a été lavée avec un VD de 4, avec une surface membranaire de 39 $cm^2$. 54% de l'ATP, 56% de l'ADP, 67% de l'AMP et 97% du 2-mercaptoethanol ont été éliminés pour obtenir une pureté en CoA égale à 45%. La pureté finale est une valeur relative qui dépend de la pureté initiale et du nombre de lavages.

La perméabilité étant la capacité d'une membrane à laisser passer une solution, celle-ci a été évaluée pour de l'eau déionisée avant et après la dia-ultrafiltration.

La perméabilité $L_p$ ($L/h/m^2/bar$) à l'eau a été calculée selon la formule suivante, où $J_v$ est le flux à l'eau ($L/h/m^2$), P la pression appliquée au système en entrée (bar), $V_p$ est le volume de perméat, t est un intervalle de temps (h) et S la surface de la membrane ($m^2$) :

$$L_p = J_v / P \qquad \text{avec } J_v = V_p / (t \times S)$$

La différence de perméabilité à l'eau avant et après la dia-ultrafiltration était inférieure à 10 %, la solution d'alimentation de la dia-ultrafiltration n'a donc pas colmaté la membrane, qui pourra être réutilisée.

**EXEMPLE 6 : Séparation de molécules de $NADP^+$ *via* dia-ultrafiltration tangentielle.**

Une dia-ultrafiltration tangentielle (Figure 3) a été réalisée avec une solution d'alimentation contenant de la $NADP^+$, de l'ATP, de l'ADP et de l'AMP dans un volume final de 200 mL d'eau milliQ. La pureté de la solution de départ en termes de $NADP^+$ est de 52%.

La membrane utilisée est la membrane GK, c'est-à-dire avec une membrane en polyamide modifié, ayant un cut-off de 1500 Da pour le PEG, et utilisable à un pH compris entre 1 et 11.

La solution de lavage est de l'eau déionisée.

Les pertes et puretés attendues sont prédites grâce à l'équation suivante, où $C_{R,i,t}$ est la concentration dans le rétentat de chaque espèce i en solution au temps t, où $C_{A,i,0}$ est la concentration dans l'alimentation de chaque espèce i en solution au temps t=0, où $R_i$ est le taux de rétention de chaque espèce i en solution (entre 0 et 1), où $V_0$ est le volume d'alimentation et où $V_t$ est le volume de solution de lavage au cours du temps :

$$C_{R,i,t} / C_{A,i,0} = e^{(-(1-R_i) \times V_t / V_0)}$$

Les pertes sont calculées avec l'équation suivante, où $C_{A,i,0}$ est la concentration dans l'alimentation de chaque espèce i en solution au temps t=0, $C_{R,i,t}$ est la concentration dans le rétentat de chaque espèce i en solution au temps t :

$$\text{Pertes}_i (\%) = ((C_{A,i,0} - C_{R,i,t}) / C_{A,i,0}) \times 100$$

La pureté est calculée avec l'équation suivante où $C_{R,i,t}$ est la concentration dans le rétentat de chaque espèce i en solution au temps t, et i, j, k... sont les espèces en solution :

$$Pureté_i\ (\%)=(C_{R,i,t}/(C_{R,i,t}+C_{R,j,t}+C_{R,k,t}))\times 100$$

Un volume de dia-filtration (VD) correspond au volume d'alimentation La solution d'alimentation a été lavée avec un VD de 7, avec une surface membranaire de 39 $cm^2$. 50% de l'ATP, 47% de l'ADP et 93% de l'AMP ont été éliminés pour obtenir une pureté en $NADP^+$ égale à 59%. La pureté finale est une valeur relative qui dépend de la pureté initiale et du nombre de lavages. Bien qu'ici l'augmentation de la pureté soit faible, ce résultat montre néanmoins la possibilité de purifier le $NADP^+$. La pureté peut été améliorée par optimisation, par exemple en augmentant le nombre de lavages.

La perméabilité étant la capacité d'une membrane à laisser passer une solution, celle-ci a été évaluée pour de l'eau déionisée avant et après la dia-ultrafiltration.

La perméabilité $L_p$ (L/h/$m^2$/bar) à l'eau a été calculée selon la formule suivante, où $J_v$ est le flux à l'eau (L/h/$m^2$), P la pression appliquée au système en entrée (bar), $V_p$ est le volume de perméat, t est un intervalle de temps (h) et S la surface de la membrane ($m^2$) :

$$L_p=J_v/P \qquad \text{avec } J_v=V_p/(t\times S)$$

La différence de perméabilité à l'eau avant et après la dia-ultrafiltration était inférieure à 10 %, la solution d'alimentation de la dia-ultrafiltration n'a donc pas colmaté la membrane, qui pourra être réutilisée.

## Revendications

1. Procédé de purification d'une coenzyme à base adénosine de haut poids moléculaire **caractérisé en ce qu'**il met en oeuvre une dia-filtration tangentielle en présence d'une solution de lavage aqueuse ou de toute autre solution tampon aqueuse.

2. Procédé selon la revendication 1 dans lequel ladite solution aqueuse est de l'eau déionisée.

3. Procédé selon l'une des revendications précédentes dans lequel ladite filtration est une dia-ultrafiltration tangentielle.

4. Procédé selon l'une des revendications précédentes dans lequel ladite coenzyme est le disulfure de coenzyme A ($(CoAS)_2$), la Coenzyme A (CoA) ou l'un de ses dérivés, ou le nicotinamide adénine dinucléotide phosphate ($NADP^+$).

5. Procédé selon la revendication 4 dans lequel ledit dérivé de coenzyme A est de formule (I)

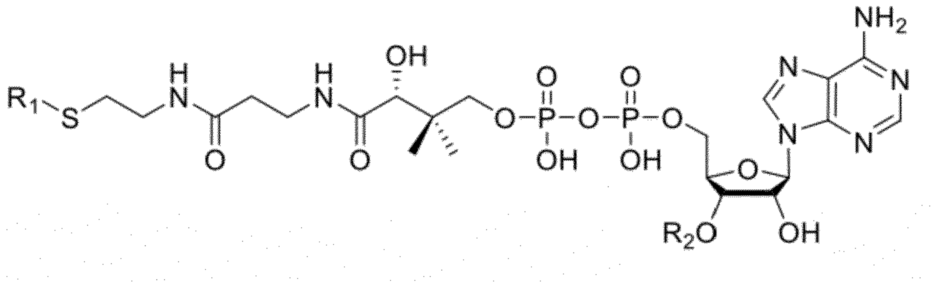

(I)

dans laquelle

$R_1$ représente un groupement acyle en $C_1$ à $C_{22}$ linéaire, cyclique ou branché, saturé ou insaturé, possédant ou non un groupement acide carboxylique, alcool et/ou amine en position terminale ou ramifiée ; un groupement alkyle en $C_1$ à $C_{22}$ linéaire, cyclique ou branché, saturé ou insaturé, possédant ou non un groupement acide carboxylique, alcool et/ou amine en position terminale ou ramifiée ; un groupement benzoyle ou benzyle ; et $R_2$ représente un H ou un groupement phosphate.

6. Procédé selon l'une des revendications précédentes dans lequel la membrane est choisie parmi une membrane en polymère de type polyéthersulphone (PES) et une membrane en polyamide modifié.

7. Procédé selon l'une des revendications précédentes dans lequel la pression appliquée au système pendant ladite filtration est comprise entre 4 et 20 bars.

## Patentansprüche

1. Verfahren zum Reinigen eines adenosinbasierten Coenzyms mit hohem Molekulargewicht, **dadurch gekennzeichnet, dass** es eine tangentiale Diafiltration in Gegenwart einer wässrigen Waschlösung oder einer anderen wässrigen Pufferlösung durchführt.

2. Verfahren nach Anspruch 1, wobei die wässrige Lösung entionisiertes Wasser ist.

3. Verfahren nach einem der vorstehenden Ansprüche, wobei die Filtration eine tangentiale Diaultrafiltration ist.

4. Verfahren nach einem der vorstehenden Ansprüche, wobei das Coenzym Coenzym-A-Disulfid ($(CoAS)_2$), Coenzym A (CoA) oder eines seiner Derivate oder Nikotinsäureamid-adenin-dinucleotidphosphat ($NADP^+$) ist.

5. Verfahren nach Anspruch 4, wobei das Coenzym-A-Derivat die Formel (I) aufweist

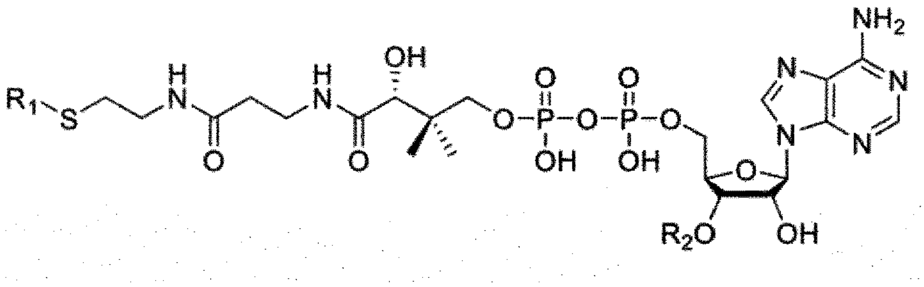

(I)

wobei

$R_1$ eine lineare, zyklische oder verzweigte, gesättigte oder ungesättigte $C_1$- bis $C_{22}$-Acylgruppe, die eine Carbonsäure-, Alkohol- und/oder Amingruppe in der terminalen oder verzweigten Position besitzt oder nicht; eine lineare, zyklische oder verzweigte, gesättigte oder ungesättigte $C_1$- bis $C_{22}$-Alkylgruppe, die eine Carbonsäure-, Alkohol- und/oder Amingruppe in der terminalen oder verzweigten Position besitzt; eine Benzoyl- oder Benzylgruppe darstellt; und
$R_2$ H oder eine Phosphatgruppe darstellt.

6. Verfahren nach einem der vorstehenden Ansprüche, wobei die Membran aus einer Polymermembran einer Polyethersulfonart (PES-Art) und einer Membran aus modifiziertem Polyamid ausgewählt ist.

7. Verfahren nach einem der vorstehenden Ansprüche, wobei der während der Filtration auf das System ausgeübte Druck zwischen 4 und 20 bar beträgt.

## Claims

1. Method for purifying a high molecular weight adenosine-based coenzyme, **characterized in that** it implements a tangential diafiltration in the presence of an aqueous washing solution or any other aqueous buffer solution.

2. Method according to claim 1, wherein said aqueous solution is deionized water.

3. Method according to any of the preceding claims, wherein said filtration is a tangential dia-ultrafiltration.

4. Method according to any of the preceding claims, wherein said coenzyme is coenzyme A disulfide ($(CoAS)_2$), Coenzyme A (CoA) or a derivative thereof, or nicotinamide adenine dinucleotide phosphate ($NADP^+$).

**5.** Method according to claim 4, wherein said coenzyme A derivative has formula (I)

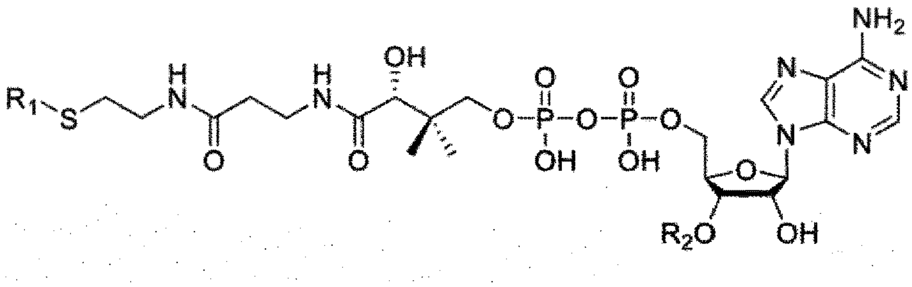

(I)

wherein

$R_1$ represents a linear, cyclic or branched, saturated or unsaturated $C_1$-$C_{22}$ acyl group with or without a carboxylic acid, alcohol and/or amine group in the terminal or branched position; a linear, cyclic or branched, saturated or unsaturated $C_1$-$C_{22}$ alkyl group with or without a carboxylic acid, alcohol and/or amine group in the terminal or branched position; a benzoyl or benzyl group; and

$R_2$ represents an H or a phosphate group.

**6.** Method according to any of the preceding claims, wherein the membrane is selected from a polyethersulfone (PES) polymer membrane and a modified polyamide membrane.

**7.** Method according to any of the preceding claims, wherein the pressure applied to the system during said filtration is between 4 and 20 bar.

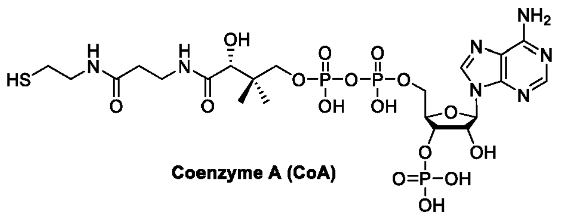

Coenzyme A (CoA)

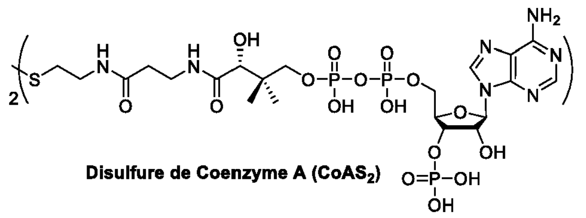

Disulfure de Coenzyme A ($CoAS_2$)

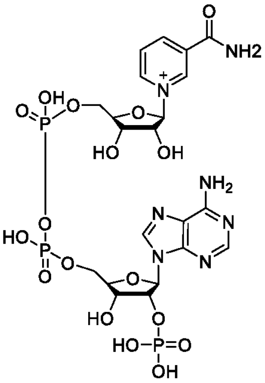

Nicotinamide adenosine phosphate ($NADP^+$)

Figure 1

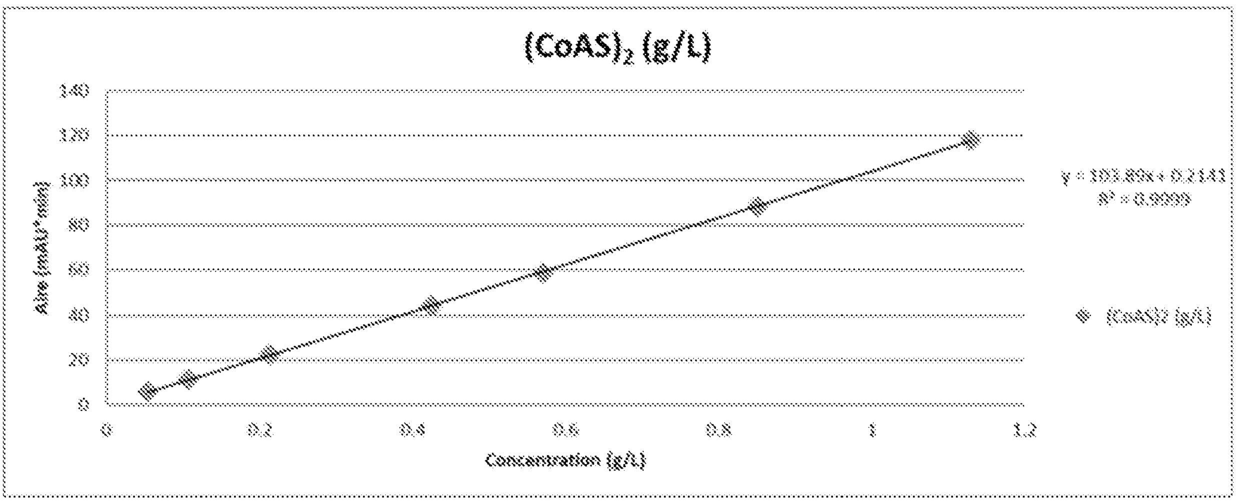


Figure 2

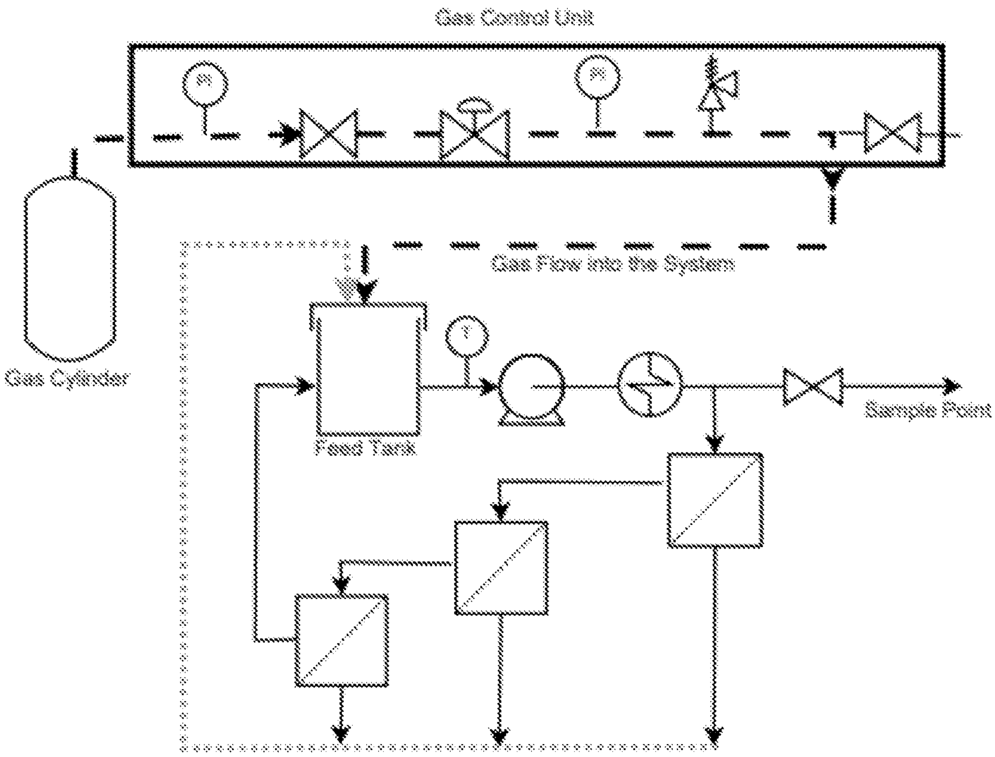


Figure 3

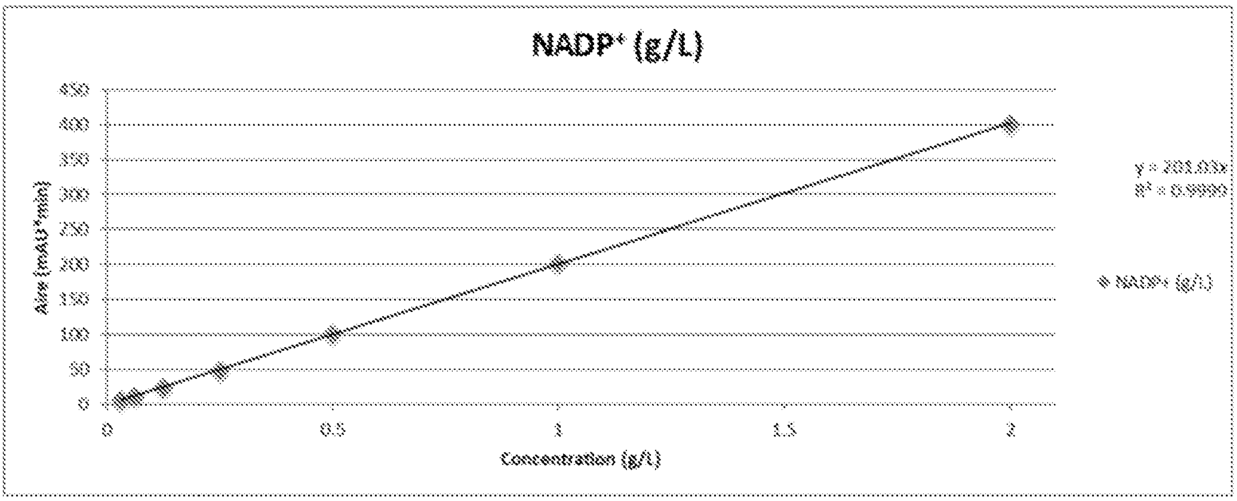


Figure 4

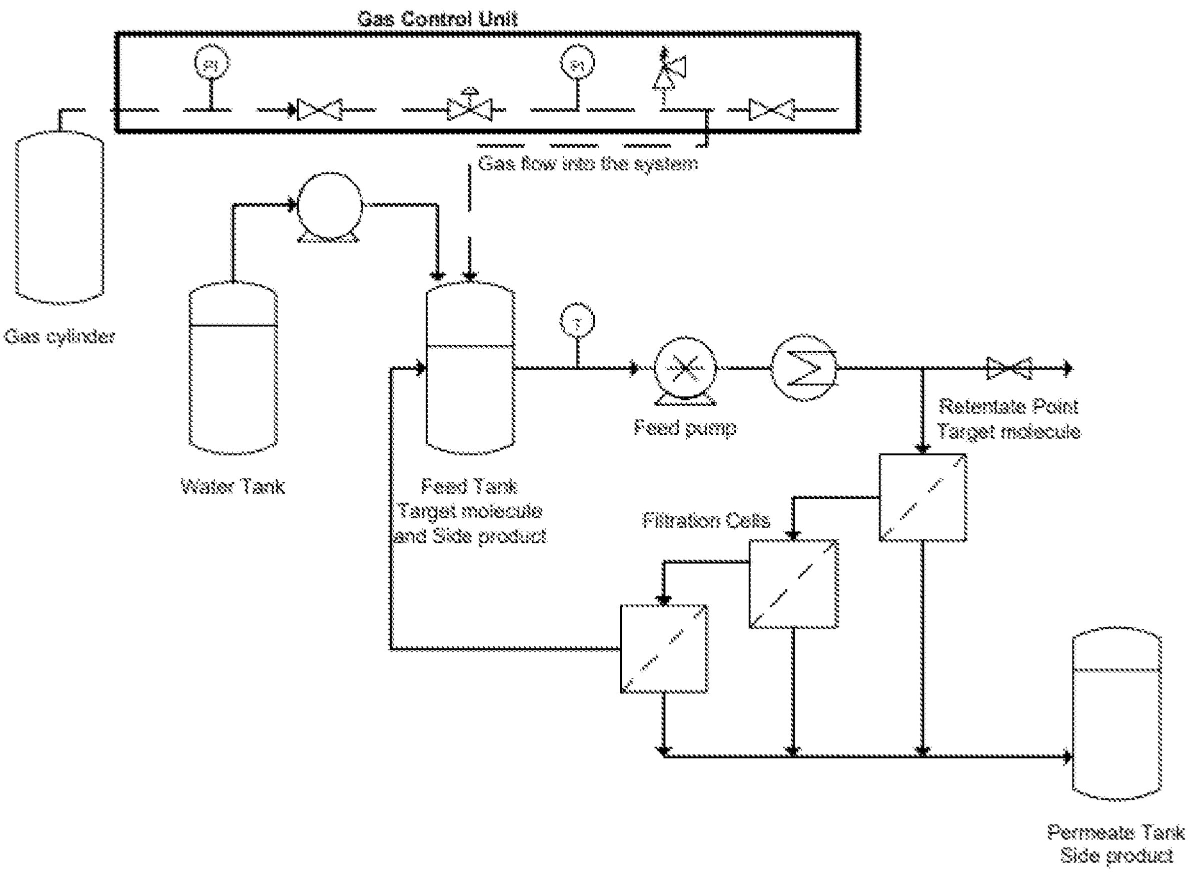
Gas Control Unit
Gas flow into the system
Gas cylinder
Water Tank
Feed Tank
Target molecule
and Side product
Feed pump
Retentate Point
Target molecule
Filtration Cells
Permeate Tank
Side product

Figure 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 2008144792 A
- DE 102004002259


### Littérature non-brevet citée dans la description


- **MOUTERDE L. et al.** *Org. Process Res. Dev.,* 2016, vol. 20 (5), 954-959
- **MOUTERDE L. et al.** *Org. Process Res. Dev.*